(19) Europäisches Patentamt / European Patent Office / Office européen des brevets

(11) **EP 2 133 774 A1**

(12) **EUROPEAN PATENT APPLICATION**
published in accordance with Art. 153(4) EPC

(43) Date of publication:
**16.12.2009 Bulletin 2009/51**

(51) Int Cl.:
**G06F 3/041** (2006.01)   **G03B 21/26** (2006.01)
**G09G 5/00** (2006.01)

(21) Application number: **08721607.3**

(22) Date of filing: **07.03.2008**

(86) International application number:
**PCT/JP2008/054189**

(87) International publication number:
**WO 2008/108465 (12.09.2008 Gazette 2008/37)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **08.03.2007 JP 2007058725**

(71) Applicants:
• **Lunascape Co., Ltd.**
  **Minato-ku**
  **Tokyo 106-0043 (JP)**
• **Takram Design Engineering**
  **Shinjuku-ku**
  **Tokyo 160-0022 (JP)**

(72) Inventors:
• **KONDO, Hidekazu**
  **Tokyo 111-0041 (JP)**
• **TAGAWA, Kinya**
  **Tokyo 160-0022 (JP)**

(74) Representative: **Kramer - Barske - Schmidtchen**
**European Patent Attorneys**
**Landsberger Strasse 300**
**80687 München (DE)**

(54) **PROJECTOR SYSTEM**

(57)   A projector system projects derivation markers (3010) together with a guarantee marker (3020) onto a projector screen, allows noise images as marker candidates, automatically generates a plurality of provisional two-dimensional projection conversion formulas, and uses the position of the guarantee marker (3020) to detect the true conversion formula from among the generated plurality of conversion formulas.

START

S10 PROJECT DERIVATION MARKERS, GUARANTEE MARKER

S20 FROM RECEIVED SCREEN, ACQUIRE POSITIONS OF DERIVATION MARKER CANDIDATE IMAGES, WHILE ALLOWING GUARANTEE MARKER AND NOISE

S30 SELECT 4 ARBITRARY CANDIDATE IMAGE POSITIONS

S40 AUTOMATICALLY GENERATE PROVISIONAL CONVERSION FORMULA FROM POSITIONS OF 4 SELECTED CANDIDATE IMAGES AND POSITIONS OF DERIVATION MARKERS ON PROJECTED SCREEN

S50 USE PROVISIONAL CONVERSION FORMULA TO CONVERT POSITIONS OF REMAINING CANDIDATE IMAGES THAT WERE NOT SELECTED INTO POSITIONS ON PROJECTOR SCREEN

S60 COMPARE POSITION OF GUARANTEE MARKER ON PROJECTOR SCREEN WITH EACH CONVERTED POSITION

S70 MATCH FOUND? — NO / YES

S80 SET CURRENT PROVISIONAL CONVERSION FORMULA

END

**FIG.6**

EP 2 133 774 A1

**Description**

TECHNICAL FIELD

The present invention relates to a projector system that projects images, and more particularly to a projector system that projects an image identical to an image displayed on the display device of a computer onto the surface of an object (hereinafter referred to as a projector screen) by means of a projector.

BACKGROUND ART

Conventional projector systems can project information such as figures and documents created on a PC or similar computer onto a projector screen, and thus have been used for presentations in large locations such as lecture halls.

With such projector systems, when the lecturer points to a projected image, he or she must use a long rod to point to a specific location on the projector screen. For this reason, two people have been needed for presentations: one person to operate the PC for operations such as flipping the pages of the images to be projected, and one person to give the lecture.

In order to resolve such inconvenience, a projector system has been proposed wherein a portable infrared light-emitting device referred to as a laser pen is used to remotely shoot laser light onto the projector screen, and project the figure of a spot (a circular point) of a specific color. In so doing, an arbitrary location on the projector screen can be called to the audience's attention (see Patent Literature 1).

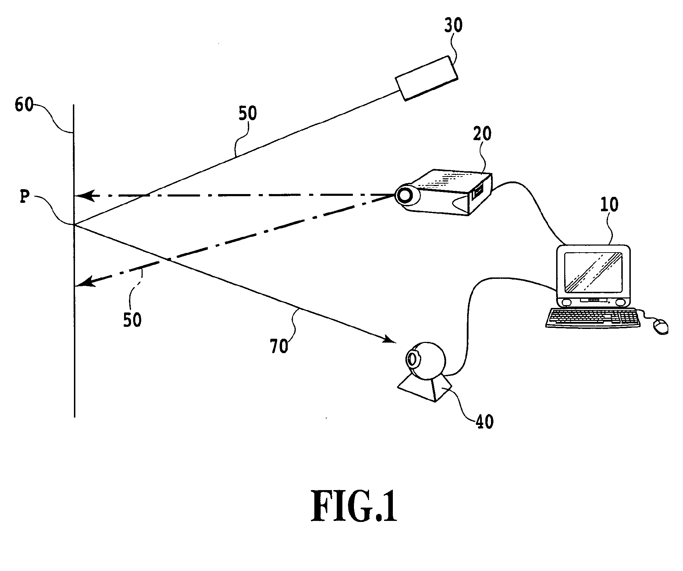

A system configuration of such a conventional example is shown in Fig.1. In Fig. 1, 10 is a personal computer that produces images to be controlled (hereinafter abbreviated as PC). The PC 10 includesmemory (RAM) that stores image data for one screen' s worth images to be displayed on a display device. This image data is made up of luminance data and chrominance data (RGB data) for each of the pixels constituting a single screen.

Installed in the PC 10 are software programs for displaying images (such as word processing software and image creation software, hereinafter abbreviated as display software), together with projector software for controlling a projector 20 (hereinafter abbreviated as projector software). As a result of a CPU within the PC executing the projector software, projection images in the form of image data (typically referred to as an image signal) stored in memory are sent from the PC 10 to the projector 20.

20 is a projector, and includes a liquid crystal display (LCD) as well as a light source. When light from the tricolor (RGB) light source radiates from behind the LCD, open pixels among the pixels in the LCD allow the light to pass through. Subsequently, the tricolor transmitted light passes through compound optics, and transmitted light 50 is projected onto a projector screen 60. Each pixel in the LCD (there being 3 RGB pixels for each pixel) is opened or closed by the above image data. In so doing, and by additionally adjusting the luminance of the tricolor light source on the basis of the image data, the images sent from the PC in the form of image data are projected onto the projector screen 60 as visible images.

30 is optical means that emits laser light 60. Since such means is typically referred to by the widespread name laser pen, such means will hereinafter be referred to as the laser pen 30 in the present specification. 40 is an optical receiver having one screen's worth of optical sensors, such as the optical receivers referred to as CCDs, can be used therefor. The optical receiver 40 includes a filter that only transmits reflected light 70 from the laser pen 30, and blocks the reflected light of the projected light from the projector 20. When the reflected light 70 is incident upon specific pixels on the light-sensitive surface of the CCD in the optical receiver 40, the CCD converts the light incident on the optical sensors of each pixel to electrical signals (i.e., a photoelectric conversion signals), and outputs the result.

The voltage of the photoelectric conversion signals output from each pixel expresses the luminance of the light incident upon that pixel. Since the photoelectric conversion signals of each of the pixels are analog signals, the analog signals are converted into a digital signal that expresses the voltages using numerical values, by means of an A/D converter within the optical receiver 40. The digital signal for 1 screen thus generated by the optical receiver 40 (hereinafter referred to as the acquired mage) is sent to the PC10. The projector software in the PC 10 compares the luminance values indicated by the per-pixel image data in the received acquired image to a predetermined threshold value, and the pixel locations having luminance values larger than the threshold value are detected. Persons viewing the projector screen 60 are able to know the location that the lecturer was pointing at by means of the image on the projector screen 60 illuminated by laser light. The image illuminated by laser light and displayed at this location is hereinafter referred to as the laser pointer.

In addition, when the position of the laser pointer in the acquired image of the optical receiver 40 is detected by the above method, the PC 10 treats information related to the position of the laser pointer similarly to a pointing device such as a mouse.

According to the projector system described above, while operating the PC 10, the lecturer is not only able to operate the laser pen 30 and specify arbitrary locations in the image projected onto the projector screen 60, but also becomes able to input location information into the PC 10.

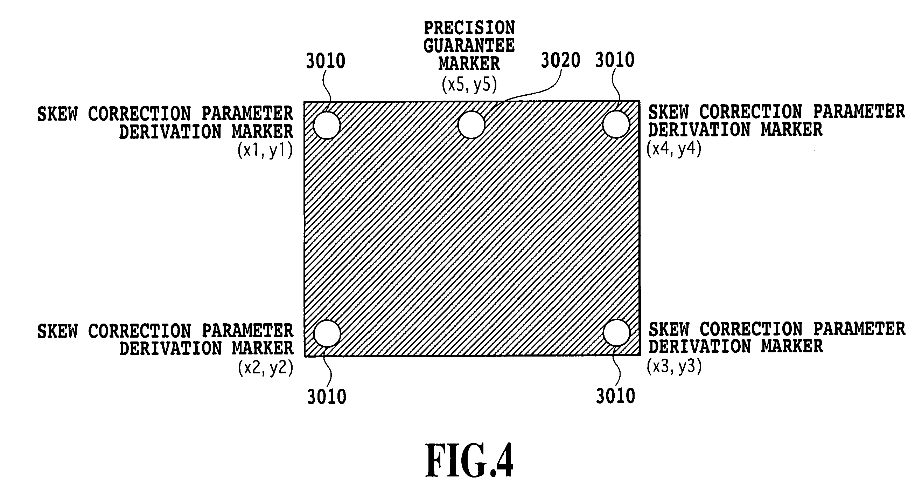

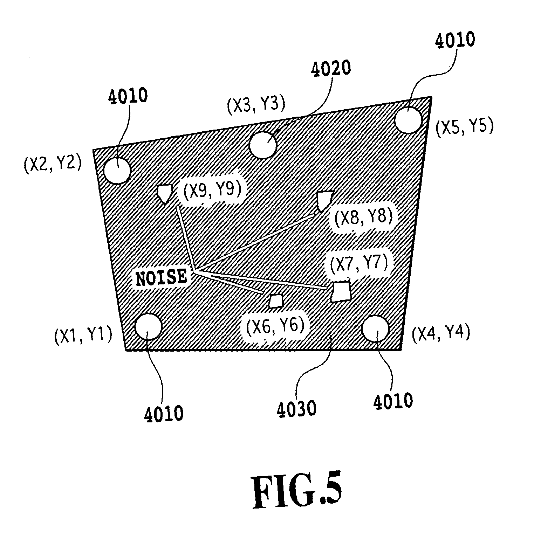

However, even if the projected screen on the screen projector 60 presents a correct rectangle as shown in Fig. 4, optical effects cause the received screen of the optical receiver 40 to be deformed from a rectangle as shown in Fig. 5 if the installation position of the optical receiver 40 differs.

Consequently, in the related art, a conversion process referred to as two-dimensional projection conversion is conducted, and the coordinates (X, Y) of arbitrary locations on the received screen in Fig. 5 are converted into the coordinates (x,y) of corresponding locations on the projected screen (see Non-Patent Literature 1).

Typically, the relationships

$$x = (A1X + B1Y + C1) / (A0X + B0Y + C0)$$

$$y = (A2X, + B2Y + C2) / (A0X + B0Y + C0)$$

hold between the locations (x,y) on the projected screen and the locations (X,Y) on the received screen. Herein, A0, A1, A2, B0, B1, B2, C0, C1, and C2 are parameters.

In the related art, in order to obtain the above parameters used for two-dimensional projection conversion, four markers 3010 for detecting the skew correction parameters are projected by the projector 20 onto the four corners of the rectangular frame of the projected screen, as indicated by the reference symbols 3010 in Fig. 4.

The image of the above markers is also detected on the received screen of the optical receiver 40 by image processing in the PC 10. When the coordinate positions of the four markers on the projected screen (fixed values determined in advance) and the positions of the images of the four markers on the received screen (positions detected from the received screen; the marker positions of the reference symbols 4010 in Fig. 5) are considered, the applied formula in the Non-Patent Literature 1 is used to simplify the above nine parameters to eight parameters. The conversion formula using the simplified eight parameters (i.e., the two-dimensional projection conversion formula) is automatically generated by the PC 10. Using the generated conversion formula, the coordinate position on the received screen of the pointer image of the laser pen detected in the received screen (i.e., the image on the projector screen 60 illuminated by the laser pen 30 that was acquired by the optical receiver 40) is converted by calculation on the PC 10 into a coordinate position on the projector screen 60.

If the projection environment of the projector is a favorable environment without light entering from windows, then there are no problems. However, interior lights (such as emergency lights) must be lighted, and if a so-called noise producing source exists, then several noise images 4030 (see Fig. 5) are produced on the received screen 40 of the optical receiver 40. In such cases, the PC 10 does not distinguish between noise images and marker images on the received screen. Thus, it is conceivable, for example, to display the entire image of the received screen on the display of the PC 10, while the lecturer operates a mouse or similar device to specify the marker images on the display screen.

However, persons who operate the projector system are not limited to being experienced computer users, and they may make a mistake and specify noise. At any rate, causing the received screen acquired by the optical receiver 40 to be displayed on the display on the PC 10 and specifying the correct markers by operating the mouse is itself cumbersome.

Patent Literature 1: Japanese Patent Laid-Open No. H11-85395
Non-Patent Literature 1: http://www.ke.lcs.saitama-u.ac.jp/kondo/Geomap/CADCGHTML/Ch apE/ChapE02.html

DISCLOSURE OF THE INVENTION

Consequently, an object of the present invention is to provide a projector system able to precisely and automatically generate a two-dimensional projection conversion formula, even when noise is mixed into the received screen.

In order to achieve such an object, the present invention is characterized by a projector system that projects an image ontoaprojectorscreen (60) bymeansofaprojector (20), receives an image of a laser pointer radiating onto the projector screen by a laser pen (30) with an optical receiver, and converts the position of the laser pointer on the received screen to a coordinate position on the projector screen using a two-dimensional projection conversion formula. In addition, the projector system projects markers (3010) onto the projector screen in advance using the projector, and automatically generates the two-dimensional projection conversion formula by using the positions of the markers received by the optical receiver (i.e., the positions of the markers 4010), as well as the pre-determined positions of markers on the projector screen (i.e., the positions of the markers 3010).
The projector system includes:

controlling means for causing the projector to project a guarantee marker (3020) in addition to the markers (i.e., the CPU 1000 that executes S10);
detecting means for detecting the positions of candidates for the markers on the received screen, while allowing noise (4030) and the guarantee marker to be included in the marker candidates (i.e., the CPU 1000 that executes S20);
conversion formula generating means for generating a provisional two-dimensional projection conversion formula using the positions of a predetermined number of candidates among the detected marker candidates, as well as the pre-determined positions of the markers on the projector screen (i.e. , the CPU 1000 that executes S40);
position converting means for using the provisional two-dimensional projection conversion formula thus created to convert the positions of the marker candidates that were not used by the conversion formula generating means to create a two-dimensional projection conversion formula into positions on the projector screen (i.e., the CPU 1000 that executes S50); and
determining means for determining whether or not there exists a position among the converted positions that matches the pre-determined position of the guarantee marker on the projector screen, and thereby determining whether or not the provisional two-dimensional projection conversion formula generated by the conversion formula generating means is the true two-dimensional projection conversion formula that used the positions of markers on the received screen (i.e., the CPU 1000 that executes S60 and S70).

When a negative determination is obtained by the determining means, a different provisional two-dimensional projection conversion formula is generated by the conversion formula generating means by varying the marker candidates used by the conversion formula generating means to generate the two-dimensional projection conversion formula, until a positive determination is obtained (i.e., loop processing of S30 to S70). The provisional two-dimensional projection conversion formula at the time a positive determination is obtained by the determining means is taken to be the true two-dimensional projection conversion formula, and used to convert the position of the laser pointer.

The above parenthetical portions indicate corresponding parts of an embodiment corresponding to the configuration requirements of the claims, but the statement of the scope of the patent claims is not to be limited thereto.

BRIEF DESCRIPTION OF THE DRAWINGS

[Fig. 1] Fig. 1 is a block diagram illustrating a hardware configuration of exemplary related art;
[Fig. 2] Fig. 2 is a block diagram illustrating a schematic hardware configuration of a PC 10 in a first embodiment of the present invention;
[Fig. 3] Fig. 3 is a block diagram illustrating a software configuration of the first embodiment of the present invention;
[Fig. 4] is an explanatory diagram illustrating marker positions on a projection screen;
[Fig. 5] is an explanatory diagram illustrating the positions of markers and noise on a received screen; and
[Fig. 6] is a flowchart illustrating the processing sequence of an optimization process in the first embodiment of the present invention.

BEST MODE FOR CARRYING OUT THE INVENTION

Hereinafter, embodiments of the present invention will be described in detail and with reference to the drawings.

(First Embodiment)

Since the hardware-related configuration of the projector system in the first embodiment of the present invention may be nearly identical to the technology of the related art in Fig. 1, the configuration is already described in the Background Art of the present specification, and thus detailed description is omitted herein.
In order to describe the present invention, the internal configuration of the PC 10 in Fig. 1 will be simply described. The present invention is not limited to the PC 10, and an information processing device that uses a CPU, or an electronic circuit or similar apparatus that combines logical arithmetic circuits may be used as the PC 10.
1000 is a CPU that executes a program installed onto a hard disk 1030 of the PC 10.
1010 is system memory, formed by ROM or RAM. Inside the system memory 1010, there are provided a memory area for loading programs to be executed by the CPU 1000, a memory area for storing images to be displayed on the display 1020, and a memory area that stores various information used when the CPU 1000 executes information processing. In addition, there is also provided a memory area that stores images for projector screen display (projection).

1020 is a display, and displays the same image as the projection image projected by the projector 20.

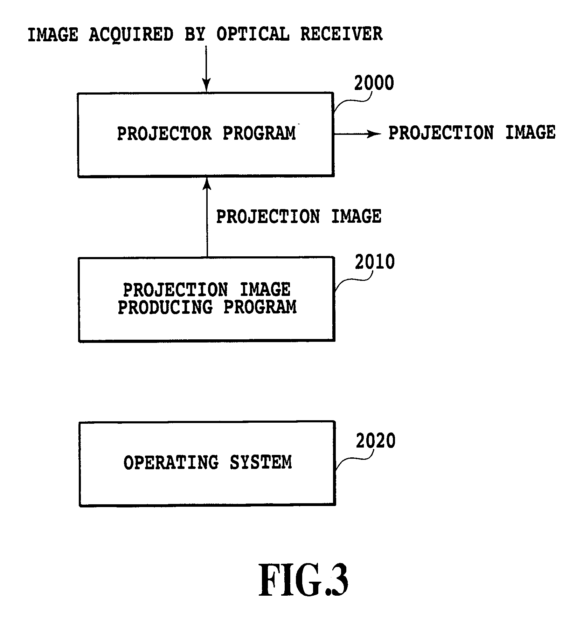

1030 is a hard disk for saving a program to be later described (Fig. 3). The program to be executed by the CPU 1000 is executed by the CPU 1000 after being loaded into the system memory 1010 from the hard disk 1030.

1040 is an input/output interface that receives acquired images from the optical receiver 40. In addition, projection images from the input/output interface 1040 are transmitted to the projector 20. It is also possible to connect conventionally well-known input/output devices such as a mouse and keyboard to the input/output interface 1040.

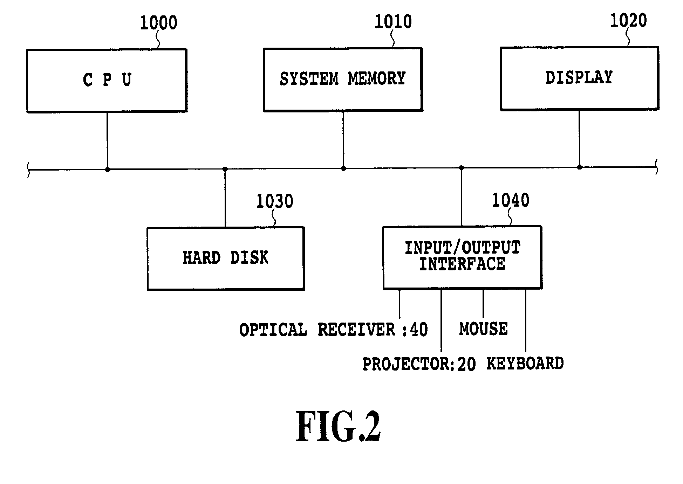

Fig. 3 illustrates the structure of software installed in the PC 10 in the first embodiment of the present invention. In Fig. 2, 2000 is a projector program, which is a program for transmitting to the projector 20 a projection image created by a projection image producing program (described later) 2010. The functions for the above are similar to those of the related art.

2010 is a projection image producing program, and is a known program that creates images to be projected. For example, software such as word processing software, spreadsheet software, image creation software, and content creation software for presentations are well-known. Projection images created by such software are stored in the memory area within the system memory 1010 used for displaying images on the display device of the PC 10, and thus projection images are passed to the projector program 2000 via this memory area (i.e., the projector program 2000 reads them from the memory area).

2020 is, for example, Microsoft Windows (registered trademark) or a similar operating system 2020. The above programs run on the operating system.

The present invention that is executed using the hardware and software described above will now be described using Figs. 4 and 5. A first point that differs from the related art is that a (precision) guarantee marker 3020 (see Fig. 4) are projected onto the projector screen by the projector 20. Herein, 3010 in Fig. 4 are markers similar to those of the related art that are used in the two-dimensional projection conversion formula. The positions of the markers 3010 and 3020 are predetermined. In this configuration, the positions of the four markers 3010 are located at the four corners of the rectangular frame of the projector screen, while the position of the guarantee marker 3020 is located at the midpoint between the upper two markers 3010. However, it is not necessary for the position of the guarantee marker to be limited to this example, and the position may be determined arbitrarily.

Fig. 5 illustrates the projected contents of the received screen in the optical receiver 40. 4010 are the images of the markers 3010, while 4020 is the image of the guarantee marker. 4030 are noise images mixed into the optical receiver 40 from the lighting environment.

In the present embodiment, the guarantee image and the noise images are both treated as marker candidates, and their positions are detected from the received screen. An image processing method similar to those of the related art may be used for the marker detection. As one example, a closed pixel region characteristic to the marker images may be detected. In the example shown in Fig. 5, 9 candidates are shown.

Thus, there are at least 4 positions for the candidates of the markers detected in this way. Consequently, the predetermined positions (x1,y1), (x2,y2), (x3,y3), and (x4,y4) of the 4 markers 3010 on the projector screen 60 as well as an arbitrary 4 positions among the 9 candidates on the received screen are used to generate a provisional two-dimensional projection conversion formula. The generation method may be similar to the related art.

If the 4 selected candidates are the images of the 4 true marker images 3010, then the image (4020) of the guarantee marker 3020 will be among the remaining 5 (9-4) candidates. Utilizing this property, in the present embodiment, the positions of the above remaining 5 candidates are respectively substituted into the generated two-dimensional projection conversion formula, and their positions on the projector screen 60 are calculated. The 5 obtained positions are then compared to the position of the guarantee marker that has been determined in advance, whose position is now being confirmed. If one among the 5 positions obtained by the two-dimensional projection conversion formula matches the position of the guarantee marker, then the provisional two-dimensional projection conversion formula generated at that time can be said to be the true two-dimensional projection conversion formula that used the 4 true markers 3010.

In contrast, if even 1 noise image is included among the 4 selected candidates, then the true two-dimensional projection conversion formula will not be obtained. Consequently, even if the image position of the guarantee marker on the received screen is converted to a position on the projector screen 50 using the provisional two-dimensional projection conversion formula obtained at that time, that position, when projected, will differ from the position of the predetermined guarantee marker 3020. The case is also similar when the image of the guarantee marker is included among the 4 selected candidates.

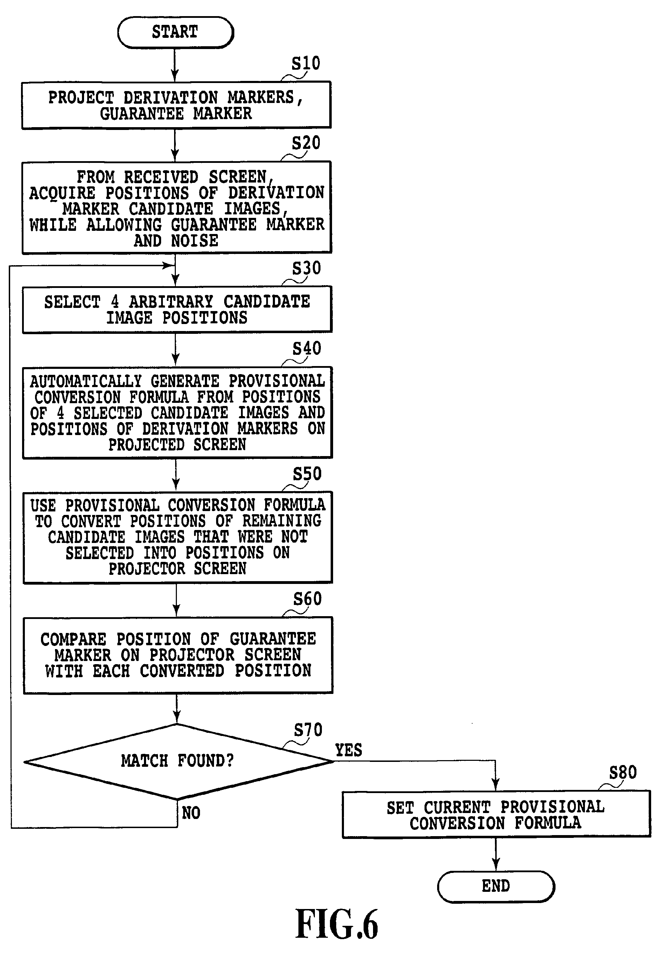

A program for realizing a method for finding the true two-dimensional projection conversion formula described above is shown in Fig. 6. This program is incorporated into the projector program 2000 of Fig. 3, and is automatically executed by the CPU 1000 of the PC 10 (hereinafter abbreviated as CPU) as an initial process when the projector program 2000 is launched.

The CPU loads the images in Fig. 4 (the images for projecting the file-format, the derivation markers and the guarantee marker) that are stored in the hard disk 1030 into the projection image memory area within the system memory 1010. Additionally, the CPU performs control to project the images in Fig. 4 onto the projector screen 60 by transmitting the loaded images to the projector 20 (S10).

The CPU imports the acquired image of the optical receiver 40 and temporarily stores it in a work area within the system memory 1010. Candidate images having the image characteristics of the derivation markers (3010) are detected in the stored image, and their positions are acquired (S20). It should be appreciated that at this point, both the guarantee marker and noise are allowed as candidates.

The CPU arbitrarily selects 4 from among the positions of the obtained marker candidates. Using the 4 obtained positions as well as the predetermined positions of the 4 derivation markers (3010) on the projector screen 60, a (provisional) two-dimensional projection conversion formula is generated similarly as in the related art (S30→S40).

The CPU substitutes the individual positions of the marker candidates that were not selected into the two-dimensional projection conversion formula, and converts the positions into positions on the projector screen 60 (S50).

The CPU compares each converted position to the predetermined position of the guarantee marker on the projector screen 6- (S50), and determines whether or not the positions match (S60).

If a negative determination (NO determination) is obtained, the CPU returns to S30, selects positions for 4 marker candidates different from the combinations up to this point, and repeats the above operating steps (loop processing of S30→S70).

When a YES determination is obtained, the provisional two-dimensional projection conversion formula generated at that time is the true two-dimensional projection conversion formula, and thus the process proceeds to S70, and the provisional two-dimensional projection conversion formula thus obtained is set as the two-dimensional projection conversion formula to be used for position conversion of the specifying pointer from the laser pen 30 (S80).

(Other Embodiments)

Although the example of a single guarantee marker is illustrated in the foregoing embodiment, the present invention is not limited thereto. A plurality of guarantee markers may be provided. In this case, it may be determined in the determination processing of S70 whether or not the comparison results from the comparison processing contain a predetermined number of matches (i.e., a number of guarantee markers).

## Claims

1. A projector system that projects an image onto a projector screen by means of a projector, receives with an optical receiver an image of a laser pointer radiating onto the projector screen from a laser pen, and converts the position of the laser pointer on the received screen to a coordinate position on the projector screen using a two-dimensional projection conversion formula, and in addition, projects markers onto the projector screen in advance using the projector, and automatically generates the two-dimensional projection conversion formula by using the positions of the markers received by the optical receiver as well as the predetermined positions of markers on the projector screen, the projector system comprising:

   controlling means for causing the projector to project a guarantee marker in addition to the markers;
   detecting means for detecting the positions of candidates for the markers on the received screen, while allowing noise and the guarantee marker to be included in the marker candidates;
   conversion formula generating means for generating a provisional two-dimensional projection conversion formula using the positions of a predetermined number of candidates among the detected marker candidates, as well as the pre-determined positions of the markers on the projector screen;
   position converting means for using the provisional two-dimensional projection conversion formula thus created to convert the positions of the marker candidates that were not used by the conversion formula generating means to create a two-dimensional projection conversion formula into positions on the projector screen; and
   determining means for determining whether or not there exists a position among the converted positions that matches the pre-determined position of the guarantee marker on the projector screen, and thereby determining whether or not the provisional two-dimensional projection conversion formula generated by the conversion formula generating means is the true two-dimensional projection conversion formula that used the positions of markers on the received screen;
   wherein
   when a negative determination is obtained by the determining means, a different provisional two-dimensional projection conversion formula is generated by the conversion formula generating means by varying the marker candidates used by the conversion formula generating means to generate the two-dimensional projection conversion formula, until a positive determination is obtained, and wherein the provisional two-dimensional projection conversion formula at the time a positive determination is obtained by the determining means is taken to be the true two-dimensional projection conversion formula, and used to convert the position of the laser pointer.

**FIG.1**

1000            1010            1020

| CPU | SYSTEM MEMORY | DISPLAY |
|---|---|---|

1030            1040

| HARD DISK | INPUT/OUTPUT INTERFACE |
|---|---|

OPTICAL RECEIVER :40    MOUSE

PROJECTOR:20   KEYBOARD

# FIG.2

IMAGE ACQUIRED BY OPTICAL RECEIVER

```
                   ┌──────────────────────┐  2000
                   │                      │
                   │  PROJECTOR PROGRAM   │──────► PROJECTION IMAGE
                   │                      │
                   └──────────────────────┘
                         ▲
                         │ PROJECTION IMAGE
                         │
                   ┌──────────────────────┐  2010
                   │  PROJECTION IMAGE     │
                   │  PRODUCING PROGRAM    │
                   └──────────────────────┘


                   ┌──────────────────────┐  2020
                   │                      │
                   │  OPERATING SYSTEM    │
                   │                      │
                   └──────────────────────┘
```

# FIG.3

PRECISION
GUARANTEE
3010      MARKER      3020  3010
          (x5, y5)

SKEW CORRECTION PARAMETER                                    SKEW CORRECTION PARAMETER
    DERIVATION MARKER                                            DERIVATION MARKER
         (x1, y1)                                                     (x4, y4)

SKEW CORRECTION PARAMETER                                    SKEW CORRECTION PARAMETER
    DERIVATION MARKER                                            DERIVATION MARKER
         (x2, y2)                                                     (x3, y3)

    3010                                                    3010

# FIG.4

EP 2 133 774 A1

FIG.5

START

S10

PROJECT DERIVATION MARKERS,
GUARANTEE MARKER

S20

FROM RECEIVED SCREEN,
ACQUIRE POSITIONS OF DERIVATION
MARKER CANDIDATE IMAGES,
WHILE ALLOWING GUARANTEE MARKER
AND NOISE

S30

SELECT 4 ARBITRARY CANDIDATE
IMAGE POSITIONS

S40

AUTOMATICALLY GENERATE PROVISIONAL
CONVERSION FORMULA FROM POSITIONS
OF 4 SELECTED CANDIDATE IMAGES AND
POSITIONS OF DERIVATION MARKERS ON
PROJECTED SCREEN

S50

USE PROVISIONAL CONVERSION FORMULA
TO CONVERT POSITIONS OF REMAINING
CANDIDATE IMAGES THAT WERE NOT
SELECTED INTO POSITIONS ON
PROJECTOR SCREEN

S60

COMPARE POSITION OF GUARANTEE
MARKER ON PROJECTOR SCREEN
WITH EACH CONVERTED POSITION

S70

MATCH FOUND?  YES

NO

S80

SET CURRENT PROVISIONAL
CONVERSION FORMULA

END

FIG.6

**INTERNATIONAL SEARCH REPORT**

<table>
<tr><td>International application No.</td></tr>
<tr><td>PCT/JP2008/054189</td></tr>
</table>

A.  CLASSIFICATION OF SUBJECT MATTER
*G06F3/041(2006.01)i, G03B21/26(2006.01)i, G09G5/00(2006.01)i*

According to International Patent Classification (IPC) or to both national classification and IPC

B.  FIELDS SEARCHED

Minimum documentation searched (classification system followed by classification symbols)
G06F3/041, G03B21/26, G09G5/00

Documentation searched other than minimum documentation to the extent that such documents are included in the fields searched
Jitsuyo Shinan Koho          1922-1996   Jitsuyo Shinan Toroku Koho   1996-2008
Kokai Jitsuyo Shinan Koho    1971-2008   Toroku Jitsuyo Shinan Koho   1994-2008

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | JP 2000-357055 A  (Seiko Epson Corp.), 26 December, 2000 (26.12.00), Full text; all drawings & US 6292171 B1          & EP 1041532 A2 | 1 |
| A | WO 2005/096130 A1  (Tamura Corp.), 13 October, 2005 (13.10.05), Full text; all drawings (Family: none) | 1 |
| A | JP 2003-044220 A  (Fuji Photo Optical Co., Ltd.), 14 February, 2003 (14.02.03), Full text; all drawings (Family: none) | 1 |

[X] Further documents are listed in the continuation of Box C.       [ ] See patent family annex.

* Special categories of cited documents:
"A" document defining the general state of the art which is not considered   to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
    07 April, 2008 (07.04.08)

Date of mailing of the international search report
    15 April, 2008 (15.04.08)

Name and mailing address of the ISA/
    Japanese Patent Office

Authorized officer

Facsimile No.

Telephone No.

Form PCT/ISA/210 (second sheet) (April 2007)

**14**

**INTERNATIONAL SEARCH REPORT**

| International application No. |
| --- |
| PCT/JP2008/054189 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2006-099504 A  (Hitachi Software Engineering Co., Ltd.),<br>13 April, 2006 (13.04.06),<br>Full text; all drawings<br>(Family: none) | 1 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H1185395 B